# EUROPÄISCHE PATENTSCHRIFT

(11) **EP 3 514 099 B1**
(45) Veröffentlichungstag und Bekanntmachung des Hinweises auf die Patenterteilung: **20.07.2022**
(21) Anmeldenummer: 19152263.0
(22) Anmeldetag: 17.01.2019
(51) Int. Cl.: B66C 1/10, F03D 13/10, F03D 1/06

(54) **VORRICHTUNG ZUR BEFESTIGUNG EINES KRAN- ODER FÜHRUNGSSEILS AN EINEM ROTORBLATT EINER WINDENERGIEANLAGE**
DEVICE FOR FIXING A CRANE OR GUIDANCE CABLE ON A ROTOR BLADE OF A WIND ENERGY SYSTEM
DISPOSITIF DE FIXATION D'UN CÂBLE DE GRUE OU DE GUIDAGE SUR UNE PALE DE ROTOR D'UNE ÉOLIENNE

(30) Priorität: 18.01.2018 DE 102018000372
(43) Veröffentlichungstag der Anmeldung: 24.07.2019
(73) Patentinhaber: Siemens Gamesa Renewable Energy Service GmbH, 20097 Hamburg (DE)
(72) Erfinder: Windbichler, Ralph, 24782 Büdelsdorf (DE)
(74) Vertreter: Glawe, Delfs, Moll

(56) Entgegenhaltungen:
- EP-A1- 2 562 418
- EP-A1- 3 312 417
- WO-A1-2013/091655
- DE-U1- 29 819 391
- US-A1- 2010 126 897
- US-A1- 2012 112 481

## Beschreibung

Die Erfindung betrifft eine Vorrichtung zum Befestigen eines Führungsseils an einem Rotorblatt, bspw. während des Anhebens eines Rotorsterns einer Windenergieanlage, sowie ein Verfahren zu deren Verwendung.

Windenergieanlagen sind aus dem Stand der Technik bekannt. Sie umfassen in der Regel einen Rotor, der drehbar an einer Gondel angeordnet ist, wobei die Gondel wiederum drehbar auf einem Turm angeordnet ist. Der Rotor treibt ggf. über eine Rotorwelle und ein Getriebe einen Generator an. Eine durch Wind induzierte Rotationsbewegung des Rotors kann so in elektrische Energie gewandelt werden, die dann über Umrichter und/oder Transformatoren - je nach Bauart des Generators auch wenigstens teilweise direkt - in ein elektrisches Netz eingespeist werden kann. Der Rotor umfasst mehrere (in der Regel drei), sich im Wesentlichen radial von der Rotorachse erstreckende Rotorblätter, die gegenüber einer Rotornabe drehbar befestigt sind, um den Anstellwinkel der Rotorblätter einzustellen.

Bei der Errichtung von Windenergieanlagen wird - je nach Konzept - der Rotor zunächst am Boden vormontiert, wobei die Rotorblätter mit der Rotornabe zur Bildung eines Rotorsterns verbunden werden, bevor der Rotorstern als solches mithilfe eines Krans zur bereits auf dem Turm befindlichen Gondel gehoben und dort an die Rotorwelle angebunden wird. Alternativ ist es bekannt, die Rotorblätter einzeln mit einem Kran zur Gondel zu heben und dort an einer bereits montierten Rotornabe zu befestigen.

Beim Anheben eines vormontierten Rotorsterns zur Gondel über einen Hauptkran ist es erforderlich, das bei der letztendlichen Montage des Rotorsterns an der Gondel nach unten weisende Rotorblatt während des Anhebens aus der horizontalen Lage mit einem Hilfskran mit anzuheben und zu halten, damit dieses Rotorblatt beim Kippen des Rotorstern aus der Horizontalen in eine Vertikale nicht durch Bodenkontakt beschädigt wird. Die Verwendung eines Hilfskrans beim Anheben eines Rotorsterns ist bspw. in Figur 3 des Dokumentes US 8,595,931 B illustriert.

Außerdem werden, um den Rotorstern während des Anhebens in die gewünschte Montageposition drehen zu können, zusätzlich Führungsseile, bevorzugt an den nach oben zeigenden Rotorblattspitzen des Rotorsterns, befestigt. Zur Befestigung entsprechender Führungsseile am Rotorstern können sogenannte Blatttaschen verwendet werden. Diese werden über die Spitzen der nach oben zeigenden Rotorblätter gestülpt. Die Blatttaschen weisen ein Anschlagelement für die Führungsseile auf. Eine mögliche Ausführung einer solchen Blatttasche ist in EP 2 562 418 A1 gezeigt.

Beim Anheben eines einzelnen Rotorblatts muss regelmäßig ein Kran- und/oder Führungsseilseil abseits der Blattwurzel am Rotorblatt selbst angreifen.

Unabhängig von dem letztendlichen Montagekonzept ist es demnach erforderlich, Kran- und/oder Führungsseile an verschiedenen Positionen entlang eines Rotorblatts befestigen zu können. Für eine entsprechende Befestigung sind im Stand der Technik verschiedene Vorrichtungen bekannt. So ist bspw. in Dokument WO 2013/091655 A1 eine Vorrichtung zur Befestigung eines Kranseils an einem Rotorblatt gezeigt, die wie eine Manschette vollständig um ein Rotorblatt geschlungen wird. Auf der Innenseite der Manschette sind aufblasbare Polsterelemente vorgesehen, mit denen sich wahlweise eine kraftschlüssige Verbindung zwischen Manschette und Rotorblatt herstellen lässt.

US2012/112481 A1, US2010/126897A1 und DE29819391U1 sind andere Beispiele von Vorrichtungen zum Befestigen eines Kran- oder Führungsseils an einem Rotorblatt einer Windenergieanlage.

Nachteilig an diesem Stand der Technik ist, dass aerodynamische Anbauteile am Rotorblatt beim Aufblasen der Polsterelemente regelmäßig beschädigt werden.

Aufgabe der vorliegenden Erfindung ist es, eine Vorrichtung zum Befestigen eines Kran- oder Führungsseils an einem Rotorblatt einer Windenergieanlage zu schaffen, bei deren ordnungsgemäßer Verwendung aerodynamische Anbauteile am Rotorblatt nicht beschädigt werden.

Gelöst wird diese Aufgabe durch die Vorrichtung gemäß dem Hauptanspruch sowie deren

Verwendung gemäß dem Anspruch 7. Vorteilhafte Weiterbildungen sind Gegenstand der abhängigen Ansprüche.

Demnach betrifft die Erfindung eine Vorrichtung zum Befestigen eines Kran- oder Führungsseils an einem Rotorblatt einer Windenergieanlage umfassend ein unnachgiebiges Ummantelungselement zum vollständigen Umschließen eines Rotorblatts in Profilrichtung mit wenigstens einem, innen liegenden aufblasbaren Inlay zum wahlweisen Herstellen einer kraftschlüssigen Verbindung zwischen Ummantelungselement und einem von diesem umschlossenen Rotorblatt, wobei sich das wenigstens eine Inlay in Umfangsrichtung des Ummantelungselementes erstreckt, wobei das wenigstens eine Inlay derart endlich ist, dass die Enden jedes Inlays jeweils so an dem Ummantelungselement mit einem Abstand benachbart zueinander angeordnet sind, dass sie bei ordnungsgemäßer Verwendung der Vorrichtung zu beiden Seiten eines aerodynamischen Anbauteils am Rotorblatt angeordnet und so ausgeformt sind, dass im aufgeblasenen Zustand des Inlays das Ummantelungselement vom aerodynamischen Anbauteil beabstandet ist.

Weiterhin betrifft die Erfindung eine Verwendung der erfindungsgemäßen Vorrichtung mit den Schritten:
Aufziehen der Vorrichtung auf ein Rotorblatt, sodass die beiden Enden des wenigstens einen Inlays zu beiden Seiten eines aerodynamischen Anbauteils am Rotorblatt angeordnet sind; und
Aufblasen des wenigstens einen Inlays zur Herstellung einer kraftschlüssigen Verbindung zwischen Ummantelungselement und Rotorblatt.

Mit "Umfangsrichtung des Ummantelungselementes" ist in Zusammenhang mit der vorliegenden Erfindung diejenige Richtung bezeichnet, die im Verwendungszustand der Vorrichtung senkrecht zur Rotorblattachse verläuft. In anderen Worten bezeichnet die Umfangsrichtung die Richtung, in der sich das Ummantelungselement um das Rotorblatt legt.

Die Erfindung hat erkannt, dass Beschädigungen an aerodynamischen Anbauteilen eines Rotorblatts bei Manschetten oder Blatttaschen mit aufblasbaren Inlays wirksam vermieden werden kann, wenn sich das entsprechende Inlay nicht über das aerodynamische Anbauteil hinweg erstreckt, sondern vielmehr, wie erfindungsgemäß vorgesehen, das Inlay zwei Enden aufweist, die bei der Verwendung jeweils zu beiden Seiten des aerodynamischen Anbauteils zu liegen kommen. Es hat sich nämlich gezeigt, dass senkrecht zur Rotorblattoberfläche auf das aerodynamische Anbauteil einwirkende Kräfte die Hauptursache für Beschädigungen an aerodynamischen Anbauteilen sind, die sich durch die genannte Maßnahme deutlich reduzieren oder sogar vollständig vermeiden lassen. Wenn die fraglichen Enden des Inlays mit dem aerodynamischen Anbauteil in Berührung kommen bzw. an diesem Anliegen, werden durch die Trennung des Inlays über das aerodynamische Anbauteil zumindest senkrecht zur Rotorblattoberfläche auf das aerodynamische Anbauteil einwirkende Kräfte deutlich reduziert; wenn die genannten Enden entfernt von dem aerodynamischen Anbauteil angeordnet sind, können diese sogar vollständig vermieden werden.

Selbstverständlich ist es in beiden Fällen erforderlich, dass das Ummantelungselement selbst ebenfalls nicht mit dem aerodynamischen Anbauteil in Berührung kommt. Das lässt sich aber durch geeignete Ausgestaltung der Enden des Inlays sicherstellen, bspw. indem die Enden das aerodynamische Anbauteil ausreichend weit überragen oder dieses brückenförmig überspannen.

Die Erfindung hat sich als besonders vorteilhaft zum Schutz von Hinterkantenkämmen ("trailing edge serrations") an Rotorblättern erwiesen. Bei entsprechend ausgestatteten Rotorblättern ist entlang der Hinterkante eine kammartige Struktur vorgesehen, durch die Schallemissionen der Windenergieanlage im Betrieb reduziert werden. Bei diesen Hinterkantenkämmen handelt es sich um aerodynamische Anbauteile, deren Zähne durch darauf als Knicklast einwirkende Kräfte leicht beschädigt werden können. Indem durch die erfindungsgemäße Vorrichtung bei ordnungsgemäßer Verwendung diejenigen Kräfte, die ein Abknicken der Zähne verursachen könnten, reduziert oder gar vollständig vermieden werden, ist auch das Risiko der Beschädigung des Hinterkantenkamms eines Rotorblatts bei der Verwendung einer Vorrichtung reduziert. Dies gilt insbesondere auch dann, wenn die beiden Enden des Inlays an jeweils einer Seite des Hinterkantenkamms anliegen. Für diesen Anwendungsfall ist daher bevorzugt, wenn wenigstens ein Inlay jeweils endlich ist und die Enden jedes Inlays jeweils so an dem Ummantelungselement benachbart zueinander angeordnet sind, dass sie bei ordnungsgemäßer Verwendung der Vorrichtung zu beiden Seiten der Hinterkante des Rotorblatts - und somit zu beiden Seiten eines dort vorgesehenen Hinterkantenkamms - angeordnet sind.

Das wenigstens eine Inlay kann durch einen durchgehenden Schlauch oder durch mehrere in Reihe angeordnete Schlauchstücke und/oder Taschen gebildet sein. Ist ein Inlay durch mehrere in Reihe angeordnete Schlauchstücke und/oder Taschen gebildet, können neben den beiden beschriebenen Enden eines Inlays noch weitere Unterbrechungen in der Anlage des aufgeblasenen Inlays am Rotorblatt geschaffen werden, in denen bspw. weitere aerodynamische Anbauteile angeordnet sein können. Ist das Inlay nicht als durchgehender Schlauch ausgestaltet, ist es bevorzugt, wenn die einzelnen Schlauchstücke und/oder Taschen eines Inlays untereinander derart fluidverbunden sind, dass sie sich gemeinsam aufblasen lassen.

Es ist weiter bevorzugt, wenn das wenigstens eine Inlay ein fern- oder seilzuggesteuertes Entlüftungsventil aufweist, über welches Luft aus einem aufgeblasenen Inlay abgelassen werden kann. Dadurch lässt sich die Vorrichtung durch Aufheben der kraftschlüssigen Verbindung mit dem Rotorblatt von diesem lösen. Insbesondere ist es so möglich, eine erfindungsgemäße Vorrichtung nach erfolgter Montage des Rotorblatts bzw. eines Rotorsterns einfach zu lösen.

Bei dem Ummantelungselement kann es sich um eine Blatttasche oder um eine Blattmanschette handeln. Bei einer Blattmanschette handelt es sich um ein beidseitig offenes, ein Rotorblatt in Umfangsrichtung umschlingendes Element, während eine Blatttasche nur einseitig offen ist und über die Spitze eines Rotorblatts gestülpt werden kann. Auch wenn das Ummantelungselement unnachgiebig ist, ist es vorzugsweise gleichzeitig ausreichend flexibel, um sich um ein Rotorblatt legen zu lassen.

Es ist bevorzugt, wenn das Ummantelungselement quer zur Umfangsrichtung wahlweise öffenbar ist. Durch eine entsprechende Öffnungsmöglichkeit ist ein einfaches Anlegen des Ummantelungselements um ein Rotorblatt möglich. Nach dem Schließen des Ummantelungselements kann dann das wenigstens eine Inlay aufgeblasen werden. Die Öffnung kann vorzugsweise zwischen den beiden Enden des wenigstens einen Inlays verlaufen und bspw. mit einem Stab, bspw. einem Carbonstab, der durch Ösen an dem Ummantelungselement zu beiden Seiten der Öffnung geführt ist, geschlossen sein. Durch Herausziehen des Stabs kann die Vorrichtung geöffnet werden.

Grundsätzlich ist es möglich, dass ein Kran- oder Führungsseil um die an einem Rotorblatt montierte Vorrichtung geschlungen wird. Es ist aber bevorzugt, wenn an dem Ummantelungselement der Vorrichtung ein Anschlagelement zur Befestigung eines Kran- oder Führungsseils vorgesehen ist. Das Anschlagelement kann bspw. als Öse ausgestaltet sein.

Zur Erläuterung des erfindungsgemäßen Verfahrens wird grundsätzlich auf die vorstehenden Ausführungen verwiesen. Die erfindungsgemäße Vorrichtung wird zu ihrer Verwendung zunächst über das Rotorblatt gezogen, bevor anschließend das wenigstens eine Inlay aufgeblasen wird, bis sich eine kraftschlüssige Verbindung zwischen Rotorblatt und erfindungsgemäßer Vorrichtung ergibt. Dabei wird beim Aufziehen der Vorrichtung über das Rotorblatt die Vorrichtung so positioniert und ausgerichtet, dass die Enden des wenigstens einen Inlays bereits vor dem Aufblasen zu beiden Seiten des zu schützenden aerodynamischen Anbauteils angeordnet sind, sodass das aerodynamische Anbauteil durch das Aufblasen des wenigstens einen Inlays nicht beschädigt wird.

Die erfindungsgemäße Vorrichtung eignet sich insbesondere zur Befestigung eines Führungsseils an den Rotorblättern eines Rotorsterns zum Beihalten während des Anhebens und der Montage eines Rotorsterns an einer Windenergieanlage. Die erfindungsgemäße Verwendung umfasst daher vorzugsweise die Befestigung eines entsprechenden Führungsseils oder Halteseils daran, bspw. an einem Anschlagelement der Vorrichtung.

Die Erfindung wird nun anhand einer vorteilhaften Ausführungsform unter Bezugnahme auf die beigefügten Zeichnungen beispielhaft beschrieben. Es zeigen:
Figur 1: eine schematische Darstellung eines ersten Ausführungsbeispiels einer erfindungsgemäßen Vorrichtung im Verwendungszustand;
Figur 2: eine Schnittansicht durch die Vorrichtung gemäß Figur 1 entlang der Schnittlinie II-II; und
Figur 3: eine Schnittansicht durch eine Ausführungsvariante zur Figur 2.

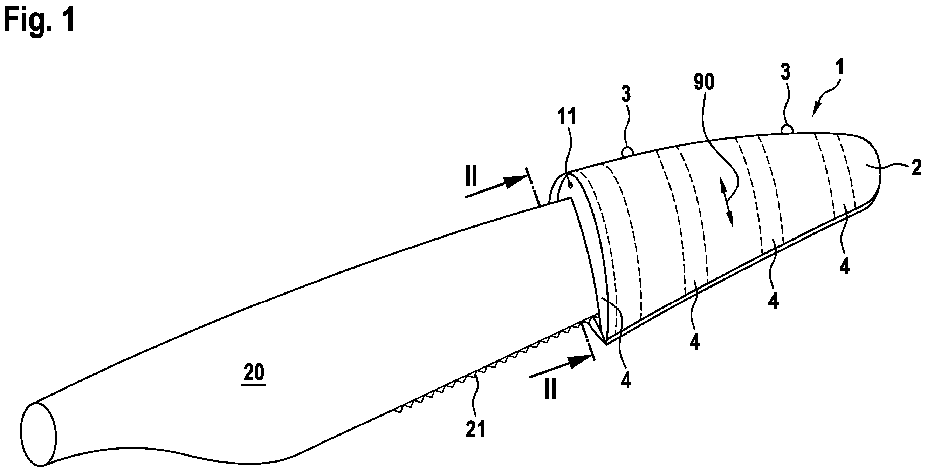

In Figur 1 ist schematisch eine Vorrichtung 1 zum Befestigen eines Kran- oder Führungsseils an einem Rotorblatt 20 einer Windenergieanlage dargestellt, wobei die Vorrichtung 1 zur Verwendung an einem Rotorblatt 20 mit Hinterkantenkamm als aerodynamischem Anbauteil 21 angebracht dargestellt ist.

Die Vorrichtung 1 ist als Blatttasche zum Aufschieben auf die Blattspitze des Rotorblatts ausgebildet und umfasst ein im Wesentlichen unnachgiebiges flexibles Ummantelungselement 2, bspw. aus LKW-Plane, welches als Blatttasche ausgeformt ist und an seiner Außenseite Ösen als Anschlagelemente 3 zur Befestigung von Kran- oder Führungsseilen (nicht dargestellt) aufweist. Auf der Innenseite des Ummantelungselementes 2 sind - wie in Figur 1 durch die gestrichelten Linien angedeutet - vier aufblasbare Inlays 4 vorgesehen, die sich in Umfangsrichtung 90 des Ummantelungselementes 2 erstrecken.

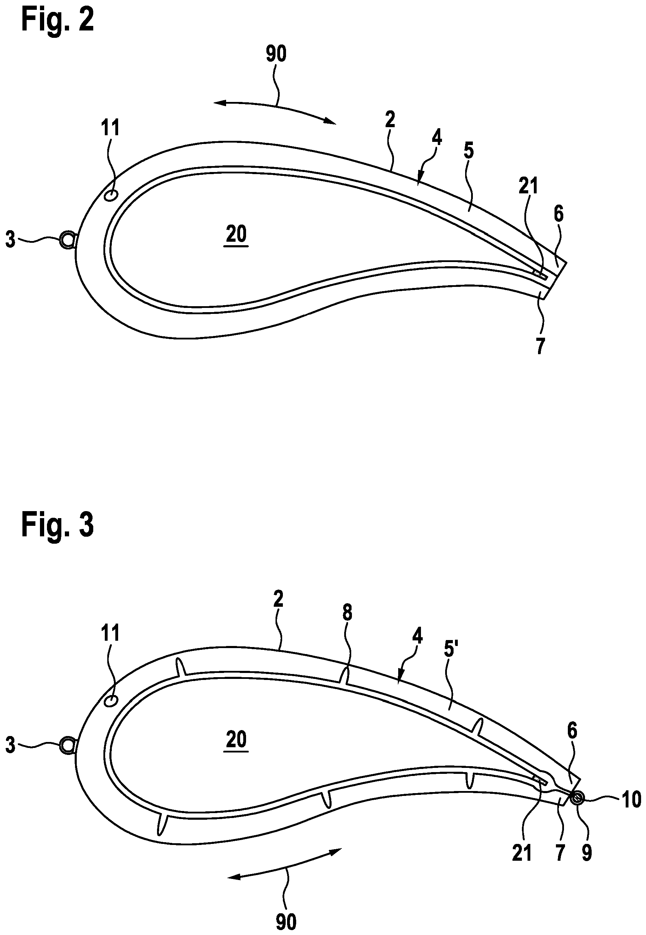

Die Inlays 4 sind alle vergleichbar ausgestaltet, weshalb die Inlays 4 nachfolgend exemplarisch an dem in Figur 2 sichtbaren Inlay erläutert werden.

Jedes der Inlays 4 umfasst einen endlichen, in Umfangsrichtung 90 des Ummantelungselementes 2 verlaufenden Schlauch 5, wobei die beiden Enden 6, 7 des Inlays 4 so beabstandet an dem Ummantelungselement 2 angeordnet sind, dass diese bei der Verwendung der Vorrichtung 1 - wie sie in Figuren 1 und 2 dargestellt ist - zu beiden Seiten des aerodynamischen Anbauteils 21 am Rotorblatt 20 zu liegen kommen. Wie aus Figur 2 unmittelbar ersichtlich, liegt der Schlauch 5 dann zu beiden Seiten der Hinterkante des Rotorblatts 20 und somit auch des aerodynamischen Anbauteil 21, ohne sich jedoch darüber hinweg zu erstrecken. Dabei liegt der Schlauch zwar seitlich unmittelbar an dem aerodynamischen Anbauteil 21 an, die Spitzen des aerodynamischen Anbauteils 21 - also die Spitzen der Zähne des Hinterkantenkamms - sind hingegen derart frei sowohl von dem Inlay 4 als auch von dem Ummantelungselement 2, dass keine unmittelbare Knickbelastung auf das aerodynamische Anbauteil 21 einwirken kann. Selbst wenn über die Öse 3 eine Kraft in die Vorrichtung 1 eingebracht wird, bleibt das aerodynamische Anbauteil 21 daher beschädigungsfrei.

In Figur 3 ist eine alternative Ausführungsvariante eines Inlays 4 zu derjenigen aus Figur 2 gezeigt.

Auch wenn sich bei der Ausführungsvariante gemäß Figur 3 das Inlay 4 weiterhin in Umfangsrichtung 90 des Ummantelungselementes 2 erstreckt, ist es nicht mehr als durchgehender Schlauch 5 (vgl. Figur 2) sondern vielmehr als eine Aneinanderreihung von mehreren Schlauchsegmenten 5' ausgebildet, die durch entsprechende Verbindungen 8 im Bereich des Ummantelungselementes 2 untereinander fluidverbunden sind.

Im Bereich der Enden 6, 7 des Inlays 4 sind die jeweiligen Schlauchsegmente 5' derart ausgeformt, dass sie das aerodynamische Anbauteil 21 brückenartig überspannen, ohne dabei jedoch mit der Spitze des aerodynamischen Anbauteils 21 in Verbindung zu kommen. Indem die beiden Enden 6, 7 im dargestellten aufgeblasenen Zustand aneinanderstoßen, kann weiterhin wirksam vermieden werden, dass das Ummantelungselement 2 mit dem aerodynamischen Anbauteil 21 in Kontakt kommt.

Das Ummantelungselement 2 ist in der in Figur 3 dargestellten Ausführungsvariante öffenbar. Dazu ist zwischen den jeweils beiden Enden der Inlays 4 eine sich quer zu Umfangrichtung 90 erstreckende Öffnung vorgesehen, zu deren beiden Seiten abwechselnd Ösen 9 angeordnet sind. Zum Verschließen der Öffnung wird ein Stab 10 in die Ösen 9 eingefädelt; zum erneuten Öffnen kann dieser Stab 10 einfach wieder herausgezogen werden.

In sämtlichen hier vorgestellten Ausführungsvarianten ist ein Entlüftungsventil 11 vorgesehen, an dem ein Zugseil zum wahlweisen Öffnen des Entlüftungsventils 11 angebracht werden kann.

Für die Verwendung einer Vorrichtung 1, wie sie in Figuren 1 bis 3, dargestellt ist, wird diese zunächst bei nicht aufgeblasenen Inlays 4 auf das Rotorblatt 20 aufgezogen. Dabei wird darauf geachtet, dass die Enden 6, 7 der Inlays 4 bereits zu beiden Seiten der Hinterkante des Rotorblatts 20 bzw. des dort vorgesehenen aerodynamischen Anbauteils 21 zu liegen kommen. Anschließend werden die Inlays 4 aufgeblasen, bis sich eine kraftschlüssige Verbindung zwischen Vorrichtung 1 und Rotorblatt 20 ergibt (dieser Zustand ist in Figuren 1 bis 3 gezeigt). Nach Befestigung bspw. eines Führungsseils an den Ösen 3 kann die Vorrichtung 1 bspw. dem Führen und Beihalten eines Rotorsterns während des Anhebens und der Montage an einer Windenergieanlage dienen. Nach erfolgter Montage des Rotorsterns, zu dem das Rotorblatt 20 gehört, wird über einen am Entlüftungsventil 11 angebrachten Seilzug die Luft aus den Inlays 4 abgelassen, womit auch der Kraftschluss mit dem Rotorblatt 20 aufgehoben wird. Die Vorrichtung 1 kann dann einfach von dem Rotorblatt 20 abgezogen werden. Dabei kann bei entsprechender Ausgestaltung der Vorrichtung 1 zusätzlich auch eine evtl. vorgesehene Öffnung des Ummantelungselementes 2 geöffnet werden.

## Patentansprüche

1. Vorrichtung (1) zum Befestigen eines Kran- oder Führungsseils an einem Rotorblatt (20) einer Windenergieanlage umfassend eine einseitig offene Blatttasche als flexibles, unnachgiebiges Ummantelungselement (2) zum Stülpen über die Spitze eines Rotorblatts und vollständigen Umschließen eines Rotorblatts (20) in Profilrichtung mit wenigstens einem, innen liegenden aufblasbaren Inlay (4) zum wahlweisen Herstellen einer kraftschlüssigen Verbindung zwischen Ummantelungselement (2) und einem von diesem umschlossenen Rotorblatt (20), wobei sich das wenigstens eine Inlay (4) in Umfangsrichtung (90) des Ummantelungselementes (2) erstreckt,
**dadurch gekennzeichnet, dass**
das wenigstens eine Inlay (4) derart endlich ist, dass die Enden (6, 7) jedes Inlays (4) jeweils so an dem Ummantelungselement (2) mit einem Abstand benachbart zueinander angeordnet sind, dass sie bei ordnungsgemäßer Verwendung der Vorrichtung (1) zu beiden Seiten eines aerodynamischen Anbauteils (21) am Rotorblatt (20) angeordnet und so ausgeformt sind, dass im aufgeblasenen Zustand des Inlays (4) das Ummantelungselement (2) vom aerodynamischen Anbauteil (21) beabstandet ist.

2. Vorrichtung nach Anspruch 1,
**dadurch gekennzeichnet, dass**
die Enden (6, 7) jedes Inlays (4) jeweils so an dem Ummantelungselement (2) benachbart zueinander angeordnet sind, dass sie bei ordnungsgemäßer Verwendung der Vorrichtung (1) zu beiden Seiten der Hinterkante des Rotorblatts (20) angeordnet sind.

3. Vorrichtung nach einem der vorhergehenden Ansprüche,
**dadurch gekennzeichnet, dass**
das wenigstens eine Inlay durch einen durchgehenden Schlauch (5) oder durch mehrere in Reihe angeordnete Schlauchstücke (5') und/oder Taschen gebildet ist, wobei die Schlauchstücke (5') und/oder Taschen eines Inlays (4) vorzugsweise untereinander fluidverbunden sind.

4. Vorrichtung nach einem der vorhergehenden Ansprüche,
**dadurch gekennzeichnet, dass**
das wenigstens eine Inlay (4) ein fern- oder seilzuggesteuertes Entlüftungsventil (11) aufweist.

5. Vorrichtung nach einem der vorhergehenden Ansprüche,
**dadurch gekennzeichnet, dass**
das Ummantelungselement (2) quer zur Umfangsrichtung (90) wahlweise öffenbar ist.

6. Vorrichtung nach einem der vorhergehenden Ansprüche,
**dadurch gekennzeichnet, dass**
ein Anschlagelement (3) zur Befestigung eines Kran- oder Führungsseils an dem Ummantelungselement (2) vorgesehen ist.

7. Verwendung einer Vorrichtung (1) gemäß einem der vorhergehenden Ansprüche, mit den Schritten:
- Stülpen der Vorrichtung (1) auf die Spitze eines ein Rotorblatt (20), sodass die beiden Enden (6, 8) des wenigstens einen Inlays (4) zu beiden Seiten eines aerodynamischen Anbauteils (21) am Rotorblatt (20) angeordnet sind; und
- Aufblasen des wenigstens einen Inlays (4) zur Herstellung einer kraftschlüssigen Verbindung zwischen Ummantelungselement (2) und Rotorblatt (20).

8. Verwendung nach Anspruchs 7,
**dadurch gekennzeichnet, dass**
nach erfolgter Montage der Vorrichtung (1) am Rotorblatt (20) ein Führungsseil zum Beihalten während des Anhebens und der Montage eines Rotorsterns an einer Windenergieanlage an der Vorrichtung (1) befestigt wird.

## Claims

1. Device (1) for securing a crane cable or guide cable to a blade (20) of a wind turbine comprising a blade pocket, that is open on one side, as a flexible, unyielding shrouding element (2) that is to be slipped over the tip of a rotor blade in order to fully surround a rotor blade (20) in the profile direction with at least one internal inflatable insert (4) for selectively establishing a force-fit connection between the shrouding element (2) and a rotor blade (20) that is surrounded thereby, wherein the at least one insert (4) extends in the circumferential direction (90) of the shrouding element (2),
**characterized in that**
the at least one insert (4) terminates in such a way that the ends (6, 7) of each insert (4) are respectively arranged on the shrouding element (2) so as to be adjacent to and spaced apart from one another, in such a way that, when the device (1) is used as intended, the inserts are arranged on both sides of an aerodynamic attachment (21) on the rotor blade (20) and are shaped in such a way that, when the insert (4) is inflated, the shrouding element (2) is spaced apart from the aerodynamic attachment (21).

2. Device according to Claim 1,
**characterized in that**
the ends (6, 7) of each insert (4) are respectively arranged adjacent to one another on the shrouding element (2) in such a way that, when the device (1) is used as intended, they are arranged on both sides of the trailing edge of the rotor blade (20).

3. Device according to either of the preceding claims, **characterized in that**
the at least one insert is formed by a continuous tubing (5) or by multiple sequentially arranged tubing sections (5') and/or pockets, wherein the tubing sections (5') and/or pockets of an insert (4) are preferably fluidically connected to one another.

4. Device according to one of the preceding claims, **characterized in that**
the at least one insert (4) has a venting valve (11) that is controlled either remotely or by means of a cable pull.

5. Device according to one of the preceding claims, **characterized in that**
the shrouding element (2) can be opened selectively transversely to the circumferential direction (90).

6. Device according to one of the preceding claims, **characterized in that**
a stop element (3) is provided, for securing a crane cable or guide cable to the shrouding element (2).

7. Use of a device (1) according to one of the preceding claims, having the following steps:
- slipping the device (1) onto the end of a rotor blade (20) so that the two ends (6, 8) of the at least one insert (4) are arranged on either side of an aerodynamic attachment (21) on the rotor blade (20); and
- inflating the at least one insert (4) so as to establish a force-fit connection between the shrouding element (2) and the rotor blade (20).

8. Use according to Claim 7,
**characterized in that**
once the device (1) has been fitted to the rotor blade (20), a guide cable is secured to the device (1) in order to hold during hoisting and fitting of a rotor star on a wind turbine.

## Revendications

1. Dispositif (1) pour la fixation d'un câble de grue ou de guidage sur une pale de rotor (20) d'une installation éolienne, comprenant une poche de pale ouverte d'un côté en tant qu'élément d'enveloppe (2) flexible indéformable destiné à être enfoncé sur la pointe d'une pale de rotor et à entourer entièrement une pale de rotor (20) dans la direction du profil, avec au moins un insert (4) gonflable situé à l'intérieur pour établir de manière sélective une liaison par adhérence entre l'élément d'enveloppe (2) et une pale de rotor (20) entourée par celui-ci, l'au moins un insert (4) s'étendant dans la direction circonférentielle (90) de l'élément d'enveloppe (2),
**caractérisé en ce que**
l'au moins un insert (4) est fini de telle sorte que les extrémités (6, 7) de chaque insert (4) sont respectivement agencées sur l'élément d'enveloppe (2) à côté l'une de l'autre à une distance de telle sorte que, lors d'une utilisation conforme du dispositif (1), elles sont agencées des deux côtés d'une pièce de montage aérodynamique (21) sur la pale de rotor (20) et sont formées de telle sorte qu'à l'état gonflé de l'insert (4), l'élément d'enveloppe (2) est espacé de la pièce de montage aérodynamique (21).

2. Dispositif selon la revendication 1, **caractérisé en ce que** les extrémités (6, 7) de chaque insert (4) sont agencées sur l'élément d'enveloppe (2) à côté l'une de l'autre de telle sorte que, lors d'une utilisation conforme du dispositif (1), elles sont agencées des deux côtés du bord arrière de la pale de rotor (20).

3. Dispositif selon l'une quelconque des revendications précédentes, **caractérisé en ce que** l'au moins un insert est formé par un tube continu (5) ou par plusieurs sections de tube (5') et/ou poches agencées en série, les sections de tube (5') et/ou les poches d'un insert (4) étant de préférence reliées fluidiquement entre elles.

4. Dispositif selon l'une quelconque des revendications précédentes, **caractérisé en ce que** l'au moins un insert (4) présente une soupape d'aération (11) commandée à distance ou par câble.

5. Dispositif selon l'une quelconque des revendications précédentes, **caractérisé en ce que** l'élément d'enveloppe (2) peut être ouvert de manière sélective transversalement à la direction circonférentielle (90).

6. Dispositif selon l'une quelconque des revendications précédentes, **caractérisé en ce qu'**un élément de butée (3) est prévu pour la fixation d'un câble de grue ou de guidage à l'élément d'enveloppe (2).

7. Utilisation d'un dispositif (1) selon l'une quelconque des revendications précédentes, comprenant les étapes suivantes :
- l'enfoncement du dispositif (1) sur la pointe d'une pale de rotor (20), de telle sorte que les deux extrémités (6, 8) de l'au moins un insert (4) sont agencées des deux côtés d'une pièce de montage aérodynamique (21) sur la pale de rotor (20) ; et
- le gonflage de l'au moins un insert (4) pour établir une liaison par adhérence entre l'élément d'enveloppe (2) et la pale de rotor (20).

8. Utilisation selon la revendication 7, **caractérisée en ce qu'**après le montage du dispositif (1) sur la pale de rotor (20), un câble de guidage est fixé au dispositif (1) pour le maintien pendant le levage et le montage d'une étoile de rotor sur une installation éolienne.
